# EUROPEAN PATENT APPLICATION

(11) **EP 4 591 766 A1**
(43) Date of publication of application: **30.07.2025**
(21) Application number: 24174646.0
(22) Date of filing: 07.05.2024
(51) Int. Cl.: A47J 37/06, F24C 15/16

(54) **BAKING PAN AND GRILL**

(30) Priority: 29.01.2024 CN 202420220888 U
(71) Applicant: Haohong Electric Technology (Hubei) Co., Ltd., Huanggang, Hubei 438000 (CN)
(72) Inventor: WANG, Min, Huanggang, 438000 (CN)
(74) Representative: Monteiro Alves, Inês

(57) **Abstract**

Disclosed are a baking pan (30) and a grill (100). The baking pan (30) is applied in the grill (100) and includes: a pan body (31) and an adjustment assembly (32), the adjustment assembly (32) is provided on one side of the pan body (31) and configured to move relative to the pan body (31) to adjust a width or a length of the baking pan (30).

## Description

### TECHNICAL FIELD

The present application relates to the technical field of kitchen appliances, and in particular to a baking pan and a grill.

### BACKGROUND

At present, the grill is a relatively common kitchen appliance used for grilling and cooking food. Since the food needs to be manually turned over the baking pan when cooking on the barbecue, most existing grills are equipped with a baking pan with a large tiled area.

However, the size of the baking pan installed in the existing grill is fixed, and the width and the length of the baking pan are limited, which is difficult to put the baking pan into grills of different styles, thus it is difficult to use with other styles of grills, and the application is very limited.

### SUMMARY

The main purpose of the present application is to provide a baking pan, aiming to solve the problem that the baking pan with the fixed size in the existing grill is difficult to put into grills of different styles, which is difficult to use with other styles of grills, and the application is very limited.

In order to achieve the above purpose, the present application provides a baking pan, which is applied in a grill and includes: a pan body; and
an adjustment assembly provided on one side of the pan body and configured to move relative to the pan body to adjust a width or a length of the baking pan.

In an embodiment, the adjustment assembly includes a fixed ear portion and an adjustment member; the fixed ear portion is relatively protruding from the pan body, and the adjustment member is movably installed on the fixed ear portion and is configured to move relative to the fixed ear portion.

In an embodiment, the adjustment assembly further includes a fastener; the fixed ear portion is provided with a fixed hole, and the adjustment member is provided with a limiting hole; the fastener is penetrated through the limiting hole and the fixed hole to be connected to the adjustment member and the fixed ear portion.

In an embodiment, the limiting hole is extended along a width direction of the grill so that the adjustment member is configured to move relative to the fixed ear portion and the fastener, and one end of the adjustment member away from the fixed ear portion is abutted against the grill.

In an embodiment, the fastener is a screw including a screw rod and a nut; the screw rod is configured to penetrate the limiting hole and the fixed hole in sequence, and the nut is stopped at the adjustment member.

In an embodiment, at least two adjustment assemblies are provided on two opposite sides of the pan body in a width direction.

In an embodiment, the fixed ear portion is bent in a direction away from the pan body, and the adjustment member is provided at a top or a bottom of the fixed ear portion.

In an embodiment, the fixed ear portion is configured to protrude towards a height direction of the pan body; the adjustment member includes a side plate and a pressing plate vertically connected to the side plate; the side plate is installed on the fixed ear portion, and the pressing plate is abutted against the grill.

The present application also provides a grill, including a grill body, an inner supporting bracket and the baking pan.

In an embodiment, the grill includes the grill body and the inner supporting bracket, and the inner supporting bracket is provided inside the grill body; the inner supporting bracket is provided with an accommodating chamber, and the baking pan is provided in the accommodating chamber; the pan body is provided in the accommodating chamber; a lug is configured to protrude outward on one side of the pan body away from the adjustment assembly, and the lug is abutted against the inner supporting bracket.

In the technical solution of the present application, the adjustment assembly is provided on one side of the pan body of the baking pan, which can move relative to the fixed pan body to adjust the width or length of the baking pan, so that the baking pan can be placed in grills of different styles. The baking pan can adapt to grills of different styles, and has a wider range of applications.

### BRIEF DESCRIPTION OF THE DRAWINGS

In order to illustrate the technical solutions in the embodiments of the present application or in the related art more clearly, the following briefly introduces the accompanying drawings required for the description of the embodiments or the related art. Obviously, the drawings in the following description are only part of embodiments of the present application. For those skilled in the art, other drawings can also be obtained according to the structures shown in these drawings without any creative effort.
FIG. 1 is a schematic structural view of a baking pan according to an embodiment of the present application.
FIG. 2 is a schematic exploded structural view of the baking pan according to an embodiment of the present application.
FIG. 3 is a partially exploded structural view of a grill according to an embodiment of the present application.
FIG. 4 is a schematic exploded structural view of the grill according to an embodiment of the present application.
FIG. 5 is a schematic three-dimensional structural view of the grill according to an embodiment of the present application.
FIG. 6 is a schematic structural view of the baking pan according to another embodiment of the present application.

### Reference signs description:

| Reference sign | name | Reference sign | name |
|---|---|---|---|
| 30 | baking pan | 34 | handle |
| 31 | pan body | 100 | grill |
| 310 | lug | 10 | grill body |
| 32 | adjustment assembly | 11 | heating member |
| 320 | fixed ear portion | 20 | inner supporting bracket |
| 321 | fixed hole | 21 | positioning plate |
| 322 | adjustment member | 22 | baffle |
| 323 | limiting hole | 23 | accommodating chamber |
| 33 | fastener | 230 | limiting chamber |
| 330 | screw rod | 40 | upper cover |
| 331 | nut | | |

The realization of the objective, functional characteristics, and advantages of the present application are further described with reference to the accompanying drawings.

### DETAILED DESCRIPTION OF THE EMBODIMENTS

The technical solutions of the embodiments of the present application will be described in more detail below with reference to the accompanying drawings. It is obvious that the embodiments to be described are only some rather than all of the embodiments of the present application. All other embodiments obtained by those skilled in the art based on the embodiments of the present application without creative efforts shall fall within the scope of the present application.

It should be noted that if there are directional indications, such as up, down, left, right, front, back, etc, involved in the embodiments of the present application, the directional indications are only used to explain a certain posture as shown in the accompanying drawings. If the specific posture changes, the directional indication also changes accordingly.

In the description of the present application, unless otherwise specified and limited, the terms "installation", "connecting" and "connection" should be understood in a broad sense, for example, it can be a fixed connection, a detachable connection, integrally connected, mechanically connected, electrically connected, directly connected or indirectly connected through an intermediary, and it can be the internal communication of two components. Those skilled in the art can understand the specific meanings of the above terms in the present application according to specific situations.

In addition, if there are descriptions related to "first", "second", etc. in the embodiments of the present application, the descriptions of "first", "second", etc. are only for the purpose of description, and should not be construed as indicating or implying relative importance or implicitly indicates the number of technical features indicated. Thus, a feature delimited with "first", "second" may expressly or implicitly include at least one of that feature. In addition, the technical solutions between the various embodiments can be combined with each other, but must be based on the realization by those of ordinary skill in the art. When the combination of technical solutions is contradictory or cannot be realized, it should be considered that the combination of such technical solutions does not exist or fall within the scope of protection claimed in the present application.

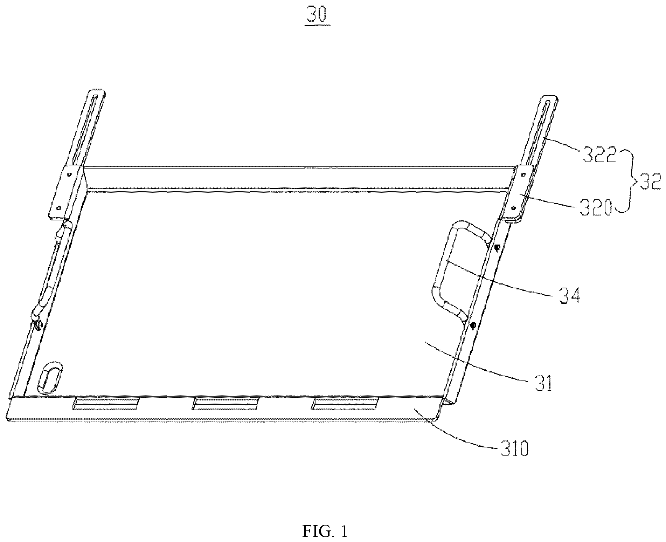

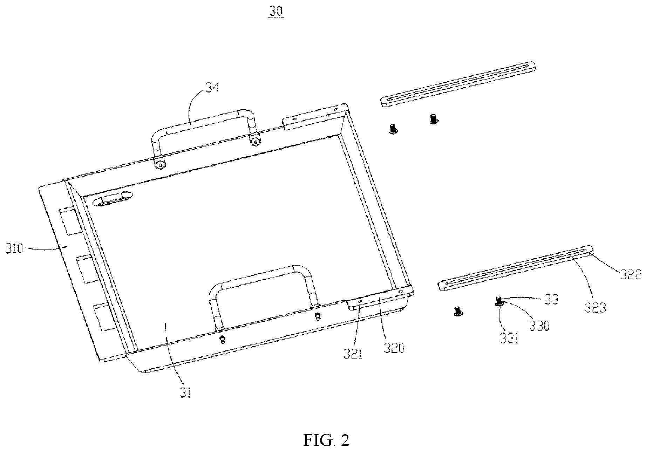

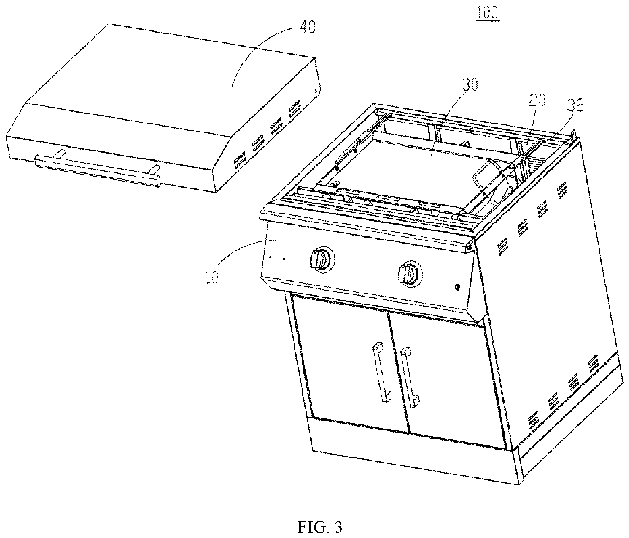

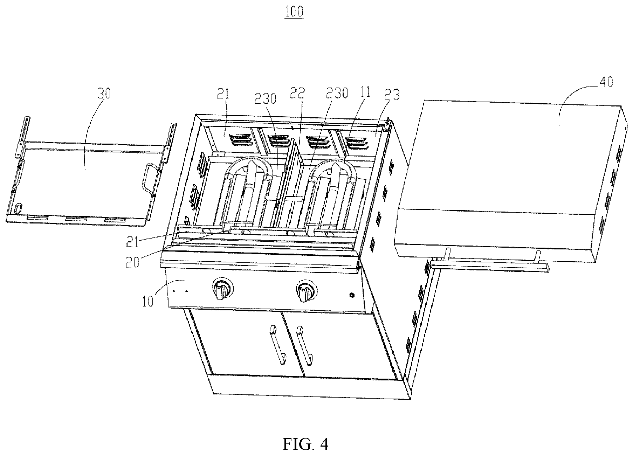

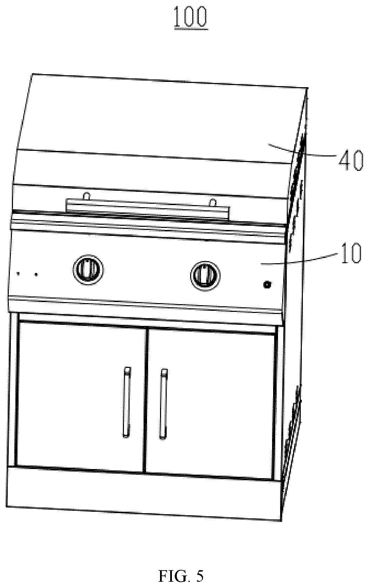

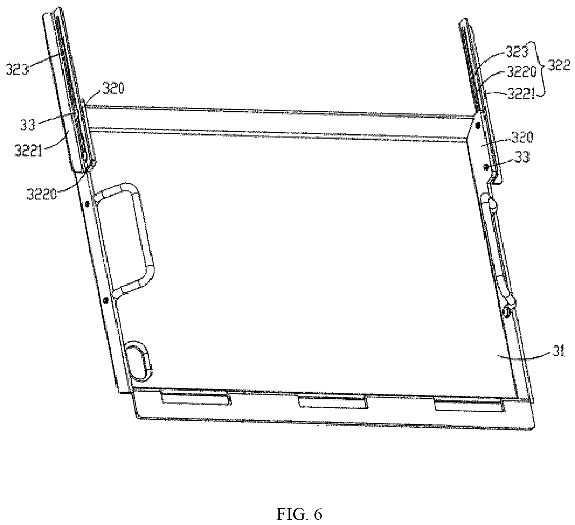

The present application provides a baking pan 30. Referring to FIG. 1 to FIG. 6, FIG. 1 is a schematic structural view of a baking pan according to an embodiment of the present application. FIG. 2 is a schematic exploded structural view of the baking pan according to an embodiment of the present application. FIG. 3 is a partially exploded structural view of a grill according to an embodiment of the present application. FIG. 4 is a schematic exploded structural view of the grill according to an embodiment of the present application. FIG. 5 is a schematic three-dimensional structural view of the grill according to an embodiment of the present application. FIG. 6 is a schematic structural view of the baking pan according to another embodiment of the present application.

In an embodiment of the present application, as shown in FIG. 1 to FIG. 6, the baking pan 30 provided in the present application is applied to a grill 100. The baking pan 30 includes:
a pan body 31; and
an adjustment assembly 32 provided on one side of the pan body 31 and can move relative to the pan body 31 to adjust a width or a length of the baking pan 30.

In the technical solution of the present application, the adjustment assembly 32 is provided on one side of the pan body 31 of the baking pan 30, which can move relative to the pan body 31 to adjust the width or the length of the baking pan 30, so that the baking pan 30 can be placed in grills 100 of different styles. The baking pan 30 can adapt to grills 100 of different styles, and has a wider range of applications.

Specifically, as shown in FIG. 1 and FIG. 2, the adjustment assembly 32 includes a fixed ear portion 320 and an adjustment member 322. The fixed ear portion 320 is relatively protruding from the pan body 31. The adjustment member 322 is movably mounted on the fixed ear portion 320 and can move relative to the fixed ear portion 320 to abut against the grill 100.

The baking pan 30 can be abutted against the grill 100 through the bottom of the pan body 31 and the bottom of the adjustment assembly 32, and the baking pan 30 is stably placed on the grill 100.

As shown in FIG. 1 to FIG. 5, the baking pan 30 can also be abutted against the grill 100 through the protruding lug 310 on one side of the pan body 31, and abutted against the grill 100 through the end portion of the adjustment assembly 32.

In an embodiment, the adjustment assembly 32 is provided on the side portion of the pan body 31 in the width direction, and the adjustment member 322 of the adjustment assembly 32 extends toward the width direction of the pan body 31, so that the baking pan 30 can indirectly increase the width of the baking pan 30 by adjusting the adjustment member 322, so that the baking pan 30 can be placed in grills 100 of different styles.

In other embodiments, the adjustment assembly 32 is provided on the side portion of the pan body 31 in the length direction, and the adjustment member 322 of the adjustment assembly 32 extends toward the length direction of the pan body 31, so that the baking pan 30 can indirectly increase the length of the baking pan 30 by adjusting the adjustment member 322, so that the baking pan 30 can be placed in grills 100 of different styles.

The baking pan 30 can be used for baking steaks, sausages, vegetables and other foods.

Since the inner supporting bracket 20 of different grills 100 has different sizes, the baking pan 30 is provided with the adjustment assembly 32 on one side of the pan body 31, and the adjustment member 322 can move relative to the fixed ear portion 320.

In order to install the adjustment member 322 to the fixed ear portion 320, the adjustment assembly 32 also includes a fastener 33. The fixed ear portion 320 is provided with a fixed hole 321, the adjustment member 322 is provided with a limiting hole 323, and the fastener 33 penetrates the limiting hole 323 and the fixed hole 321 so that the adjustment member 322 is connected to the fixed ear portion 320.

In an embodiment, the fastener 33 penetrates the limiting hole 323 on the adjustment member 322 and the fixed hole 321 of the fixed ear portion 320, and stops at the fixed ear portion 320, so as to install the adjustment member 322 to the fixed ear portion 320. The adjustment member 322 is limited at the fixed ear portion 320 by the fastener 33, and the adjustment member 322 is not easily detached from the fixed ear portion 320.

Specifically, in order to enable the adjustment member 322 to move on the fixed ear portion 320, the limiting hole 323 provided on the adjustment member 322 extends along the width direction of the grill 100. The adjustment member 322 is pulled to move in a direction closer to the inner edge of the grill 100, the adjustment member 322 can move in a direction closer to the inner supporting bracket 20 relative to the fixed ear portion 320 and the fastener 33, and one end of the adjustment member 322 away from the fixed ear portion 320 is abutted against the inner edge of the grill 100.

In order to limit the adjustment member 322 at the fixed ear portion 320, the fastener 33 is a screw. The screw includes a screw rod 330 and a nut 331. The screw rod 330 penetrates the limiting hole 323 and the fixed hole 321, and the nut 331 stops at the adjustment member 322.

In an embodiment, the adjustment member 322 is sandwiched between the fixed ear portion 320 and the nut 331 of the screw. It should be noted that the outer diameter of the nut 331 is larger than the diameter of the limiting hole 323 to prevent the adjustment member 322 from coming out of the fixed ear portion 320.

In another embodiment, the adjustment member 322 can be slidably connected to the fixed ear portion 320. The adjustment member 322 can slide relative to the fixed ear portion 320 to pull the adjustment member 322 on the fixed ear portion 320. Specifically, the fixed ear portion 320 is provided with a sliding rail, and the adjustment member 322 is provided with a sliding block or a sliding wheel. The adjustment member 322 can slide on the sliding rail to pull the adjustment member 322 on the fixed ear portion 320.

In order to enable the baking pan 30 to be placed on the inner supporting bracket 20 more stably, two adjustment assemblies 32 are provided, and the at least two adjustment assemblies 32 are provided at two sides of the pan body 31 opposite in the width direction.

In an embodiment, the adjustment assembly 32 is provided on the left and right sides of the pan body 31 respectively, and the two adjustment assemblies 32 are distributed on the edge of the pan body 31 so that the baking pan 30 can be placed stably on the grill through the two adjustment assemblies 32 and is less likely to roll over.

In order to facilitate placing the baking pan 30 on the grill 100, the baking pan 30 further includes a handle 34, and the handle 34 is provided on the pan body 31.

In an embodiment, as shown in FIG. 1, the fixed ear portion 320 is bent in a direction away from the pan body 31, and the adjustment member 322 is provided on the top or bottom of the fixed ear portion 320.

As shown in FIG. 1, the adjustment member 322 is provided at the bottom of the fixed ear portion 320. When the adjustment member 322 is pulled, the bottom of the adjustment member 322 can be abutted against the grill 100.

In another embodiment, as shown in FIG. 6, in order to pull the adjustment member 322, the fixed ear portion 320 is protruding toward the height direction of the pan body 31, and the adjustment member 322 includes a side plate 3220 and a pressing plate 3221 vertically connected to the side plate 3220. The side plate 3220 is installed on the fixed ear portion 320, and the pressing plate 3221 is abutted against the grill 100.

The side plate 3220 is configured to connect with the fixed ear portion 320, and the pressing plate 3221 is configured to abut against the grill 100. Since the side plate 3220 is provided at the side portion of the fixed ear portion 320, it is convenient to pass the fastener 323 from the side portion of the fixed ear portion 320 through the limiting hole 323 and the fixed hole 321, so that the side plate 3220 is connected to the fixed ear portion 320.

Since the side plate 3220 is provided at the side portion of the fixed ear portion 320, it is easy to pull the side plate 3220, so as to pull the adjustment member 320.

In an embodiment, the baking pan 30 is provided with two handles 34 for placing the baking pan 30 on the grill 100.

In order to prevent the two handles 34 from hindering the user's operation of the adjustment member 322, the two handles 34 are arranged away from the adjustment assembly 32.

In an embodiment, the pan body 31 is a disk structure with protruding edges on all sides and a straight middle. The bottom of the pan body 31 can be provided with an oil drain hole.

The present application also provides a grill 100, including a grill body 10, an inner supporting bracket 20 and a baking pan 30. The specific structure of the grill 100 refers to the above-mentioned embodiments. Since the second subject adopts all the technical solutions of all the above-mentioned embodiments, it at least has all the beneficial effects brought by the technical solutions of the above embodiments, which will not be described again.

In an embodiment, the grill 100 includes a grill body 10 and an inner supporting bracket 20. The inner supporting bracket 20 is provided inside the grill body 10. The inner supporting bracket 20 is provided with an accommodating chamber 23. The baking pan 30 is provided in the accommodating chamber 23, and the pan body 31 is provided in the accommodating chamber 23. A lug 310 is protruding outward on the side of the pan body 31 away from the adjustment assembly 32, and the lug 310 is abutted against the inner supporting bracket 20.

The pan body 31 of the baking pan 30 of the present application is provided with a lug 310 protruding outward from the edge. The lug 310 can be abutted against the inner supporting bracket 20, and one side of the pan body 31 away from the lug 310 is provided with the adjustment assembly 32. The adjustment member 322 is movably installed on the fixed ear portion 320 and can move relative to the fixed ear portion 320, so that the adjustment member 322 can be abutted against the inner supporting bracket 20. In this way, both sides of the baking pan 30 are abutted against the inner supporting bracket 20 of the grill 100 through the lug 310 and the adjustment assembly 32 respectively.

Since the adjustment member 322 can move outward relative to the fixed ear portion 320, the width or the length of the baking pan 30 is indirectly expanded, so that the baking pan 30 can be placed in grills 100 of different styles, and can adapt to grills 100 of different styles and sizes, and the baking pan 30 is more widely used.

In order to support the baking pan 30, the inner supporting bracket 20 includes at least two positioning plates 21, the two positioning plates 21 are arranged oppositely, and the at least two adjustment assemblies 32 are abutted against one of the positioning plates 21. The lug 310 is abutted against another positioning plate 21, so that the baking pan 30 is abutted against the two positioning plates 21. The baking pan 30 is smoothly placed on the two positioning plates 21 of the inner supporting bracket 20 through the lug 310 and the adjustment assembly 32.

In order to support the baking pan 30 more stably, the inner supporting bracket 20 also includes a baffle 22. The baffle 22 separates the accommodating chamber 23 into two limiting chambers 230, and the pan body 31 is abutted against the baffle 22. The grill body 10 includes two heating members 11 communicated with each other. The two heating members 11 are respectively provided in the two limiting chambers 230 and provided below the baking pan 30.

It should be noted that the grill 100 may be a gas grill 100 or an electric grill 100. The baking pan 30 can be placed in the gas grill 100 through the adjustment assembly 32, or can also be placed in the electric grill 100. The grill 100 may also be a pellet stove or other fuel grill. The baking pan 30 can be placed into the pellet stove through the adjustment assembly 32, or can be placed into the fuel grill.

The baking pan 30 may be a baking pan 30 configured for grilling or baking food, or may be a frying pan configured for frying food.

Specifically, in an embodiment, the grill 100 may be a gas grill 100, and the heating member 11 is a combustion tube. The gas grill 100 adopts the grill 100 structure and the heating principle of the gas frying grill 100 of CN201720542548.8. The bottom of the gas grill 100 can be provided with a cabinet for placing a gas tank.

In another embodiment, the grill 100 may be an electric grill 100, the heating member 11 may be a heating tube, the inner supporting bracket 20 may be an oil collecting pan, and the heating pipe may be provided in the oil collecting pan. The grill 100 adopts the grill 100 structure and the heating principle of an electric grill 100 of CN201911305058.6. The baking pan 30 is placed above the heating tube, the baffle 22 is provided between the two interconnected heating tubes of the grill 100, and the baffle 22 can support the baking pan 30.

It should be noted that the grill 100, whether it is an electric grill 100, a gas grill 100, a pellet stove or other fuel grill, is equipped with an upper cover 40 and a casing. The upper cover 40 is configured to cover the baking pan 30 in the accommodating chamber 23, and the casing is provided outside of the inner supporting bracket 20. The upper cover 40 and the casing can prevent dust from falling into the baking pan 30, and can also reduce the heat and oil fume of the baking pan 30 from dissipating into the external environment.

The above descriptions are only embodiments of the present application, and are not intended to limit the scope of the present application. Under the inventive concept of the present application, any equivalent structural transformations made by using the contents of the description and drawings of the present application, or direct/indirect applications in other related technical fields are included in the scope of the present application.

## Claims

1. A baking pan (30), applied in a grill (100), **characterized by** comprising:
a pan body (31); and
an adjustment assembly (32) provided on one side of the pan body (31) and configured to move relative to the pan body (31) to adjust a width or a length of the baking pan (30).

2. The baking pan (30) according to claim 1, wherein the adjustment assembly (32) comprises a fixed ear portion (320) and an adjustment member (322); the fixed ear portion (320) is relatively protruding from the pan body (31), and the adjustment member (322) is movably installed on the fixed ear portion (320) and is configured to move relative to the fixed ear portion (320).

3. The baking pan (30) according to claim 2, wherein the adjustment assembly (32) further comprises a fastener (33); the fixed ear portion (320) is provided with a fixed hole (321), and the adjustment member (322) is provided with a limiting hole (323); the fastener (33) is penetrated through the limiting hole (323) and the fixed hole (321) to be connected to the adjustment member (322) and the fixed ear portion (320).

4. The baking pan (30) according to claim 3, wherein the limiting hole (323) is extended along a width direction of the grill (100) so that the adjustment member (322) is configured to move relative to the fixed ear portion (320) and the fastener (33), and one end of the adjustment member (322) away from the fixed ear portion (320) is abutted against the grill (100).

5. The baking pan (30) according to claim 4, wherein the fastener (33) is a screw comprising a screw rod (330) and a nut (331); the screw rod (330) is configured to penetrate the limiting hole (323) and the fixed hole (321) in sequence, and the nut (331) is stopped at the adjustment member (322).

6. The baking pan (30) according to any one of claims 1 to 5, wherein at least two adjustment assemblies (32) are provided on two opposite sides of the pan body (31) in a width direction.

7. The baking pan (30) according to claim 2, wherein the fixed ear portion (320) is bent in a direction away from the pan body (31), and the adjustment member (322) is provided at a top or a bottom of the fixed ear portion (320).

8. The baking pan (30) according to claim 7, wherein the fixed ear portion (320) is configured to protrude towards a height direction of the pan body (31); the adjustment member (322) comprises a side plate and a pressing plate vertically connected to the side plate; the side plate is installed on the fixed ear portion (320), and the pressing plate is abutted against the grill (100).

9. A grill (100), **characterized by** comprising a grill body (10), an inner supporting bracket (20) and the baking pan (30) according to any one of claims 1 to 8.

10. The grill according to claim 9, wherein the grill (100) comprises the grill body and the inner supporting bracket (20), and the inner supporting bracket (20) is provided inside the grill body (10); the inner supporting bracket (20) is provided with an accommodating chamber (23), and the baking pan (30) is provided in the accommodating chamber (23); the pan body (31) is provided in the accommodating chamber (23); a lug is configured to protrude outward on one side of the pan body (31) away from the adjustment assembly (32), and the lug is abutted against the inner supporting bracket (20).
